# EUROPEAN PATENT SPECIFICATION

(11) **EP 0 326 382 B1**
(45) Date of publication and mention of the grant of the patent: **23.04.1997**
(21) Application number: 89300752.6
(22) Date of filing: 26.01.1989
(51) Int. Cl.: C08J 3/12, C08L 101/02, B01J 2/00, C10L 5/14

(54) **Polymeric compositions**
Polymermischungen
Compositions polymères

(30) Priority: 28.01.1988 GB 8801902; 28.01.1988 GB 8801903; 30.12.1988 GB 8830384
(43) Date of publication of application: 02.08.1989
(73) Proprietor: ALLIED COLLOIDS LIMITED, Bradford, West Yorkshire BD12 0JZ (GB)
(72) Inventor: Farrar, David, Bradford West Yorkshire BD10 8UB (GB); Field, John Rodney, Halifax West Yorkshire (GB); Flesher, Peter, Bingley West Yorkshire (GB)
(74) Representative: Lawrence, Peter Robin Broughton

(56) References cited:
- EP-A- 0 277 018
- EP-A- 0 318 989
- FR-A- 2 600 267
- US-A- 4 696 762

## Description

Water absorbent polymers can absorb large amounts of deionised water, e.g., at least 25 grams deionised water per gram dry weight of polymer. The polymers can be insoluble in water, in which event particles of the polymer will swell and absorb water but will not dissolve into the water, or the polymers can be soluble in water, in which event particles of the polymers will initially swell to absorb water but will subsequently dissolve into the water.

Water absorbent synthetic polymers can be made by, for instance, graft polymerisation, but the polymers are normally made in particulate form on a commercial scale by reverse phase bead polymerisation followed by drying or by gel polymerisation followed by drying and comminution.

The product of reverse phase bead polymerisation usually has relatively good flow properties but may contain significant amounts of undersized particles and these can cause difficulties during handling, for instance due to dusting problems or flow problems in some instances, and can cause difficulties during absorption of water.

The product of gel polymerisation and comminution tends to have a wide range of particle sizes. The particles generally are randomly shaped and are not substantially spherical, and so flow problems can arise when there is a substantial proportion of smaller particles, for instance below 125 or 150µm. Also there can be a significant amount of undersized particles in the product and these can cause dusting problems during handling and absorption problems upon contact with water.

In general, it is desirable for the particles to be substantially all above 125µm (in order to minimise flow problems) and it is particularly desirable that the product should be substantially free of particles below 50µm, in order to minimise dusting problems during handling and absorption problems upon contact with water. For instance if there are significant amounts of very small particles then these very small particles may collect together into sticky lumps upon contact with water, and will then only absorb water very slowly.

Where any of these problems are particularly serious, it is therefore common to sieve the undersized particles from the product. The removed fines are then dumped, used in an environment where dusting, flow or absorption properties are adequate, or recycled so as to form part of the final dried product. For instance they can be put back into the gel recovery process at a wet stage and will then form a component of particles of the final product and which it is intended should be coarser. Such recycled undersized particles will form a minor proportion only of the final product and will be present as permanent components of coarser particles in the final product.

None of these techniques are entirely satisfactory and so it would be desirable to be able to reduce the production of fines or to be able to use them in some beneficial manner.

In theory, very small polymer particles will absorb water more quickly than larger particles but in pratice this may not happen. For instance when the relatively coarse particles used in the process of EP-A-195550 are replaced by the same weight of finer dry powder it is found that the absorption appears less effective. Also it is necessary to prevent the small particles from lumping together during the absorption or hydration of the particles.

It is known to make reverse phase dispersions of cross linked polymers, for instance as thickeners for aqueous media, and reverse phase dispersions of water soluble polymers, for instance as flocculants for aqueous media, wherein the size of the polymer particles is typically below 3µm. Recovery of the product in corresponding powder form tends to incur unacceptable dusting and flow problems.

It is known to make cross linked water absorbent polymers by precipitation polymerisation, and it appears that the precipitate that is collected consists of clusters (perhaps of a size 5-25µm) of smaller particles, perhaps having a size of 1µm or less. These clusters readily break down during handling to form a rather dusty powder. It seems that when the precipitated clusters are dispersed into water, as a thickening agent, the individual cross linked particles separate from one another. However this is not relevant to the significant commercial problem of utilising the large volumes of fines of gel polymer that are made by reverse phase bead polymerisation or by comminuting polymer gel.

A first aspect of the invention provides a particulate polymeric product for use as a viscosifier or flocculant comprising particles of a substantially water soluble polymeric viscosifier or flocculant wherein the particles have a size of below 10µm and are present in the form of friable aggregates of which at least 90% have a size above 50µm and wherein the aggregates have been made by bonding substantially dry polymer particles with an aqueous liquid and drying the aggregates and the aggregates are friable in that they can be broken down to the individual polymer particles by mixing with an aqueous medium that is to be thickened or flocculated.

In use, the aggregates behave initially (e.g., during handling) as coarse particles but subsequently (e.g., in an aqueous medium) as fine particles.

This aspect of the invention has two great advantages. First, it solves the problem of utilising fines or other undersized particles (that have previously been regarded primarily as a waste product) in such a manner that the performance properties of the polymers can be attained whilst avoiding the flow, dusting or other problems previously associated with the undersized particles. Secondly, it utilises them in a way that can result in beneficial performance properties compared to those that are obtained when the same polymer is introduced in coarser particulate form. In particular, it is possible to make aggregates that have the handling and dusting and initial water-absorption properties that would be associated with coarser particles of the polymer but which have performance properties that are better than would be expected for polymer particles of the same size as the aggregates but of conventional, non-friable, texture. It seems that when the aggregates break down within the aqueous medium the individual particles of the aggregates are then liberated and act within the medium as if they were individual particles. Thus benefit is obtained from the higher rates of absorption due to the small particle size within the aggregates but the flow and dusting properties of the aggregates, before addition to the aqueous medium, are dictated primarily by the particle size of the aggregates.

The particles of polymer are, in the products of the invention, mainly in the form of friable aggregates (i.e., at least 50% by weight of the polymer in the product is in the form of friable aggregates). This therefore contrasts with the minor proportion of fines that might be incorporated if fines are sieved from a dried product and recycled to a wet stage, as opposed to being dumped. It is possible for the product of the invention to include a deliberate addition of particles that are not in the form of the friable aggregates but generally substantially all the water absorbent polymer is introduced in the form of the friable aggregates. If the aggregates are rather weak and/or are subjected to rigorous handling conditions some breakage of the aggregates back towards the individual particles may occur during handling and storage but preferably at least 75%, and most preferably at least 90%, by weight of the particles are present as aggregates.

This aspect of the invention is of particular value when the polymer was formed initially as a polymer gel, i.e., as a concentrated solution in water. Preferably the polymer is synthetic and preferably it will have been made by bulk gel polymerisation or by reverse phase polymerisation. Preferably the particles will have been made by deliberate comminution of the bulk gel or beads made by reverse phase bead polymerisation or will be fines or other particles that are separated from the beads during drying. The comminution can be conducted such that most or all of the gel is converted to the desired fines or the desired particles can merely be a fraction that is sieved from coarser particles. Alternatively, the particles can be made by reverse phase emulsion or suspension polymerisation to give a particle size below 10µm, often below 3µm, followed by drying and separation of the particles from the continuous phase in known manner.

The aggregates are preferably of a size such that they can be handled by conventional particle handling apparatus and so normally the particle size is above 50µm and below 2mm although in some instances it can be larger, for instance up to 5mm or even lOmm maximum size. Usually the size of the aggregates is 90% (and preferably 95%) by weight at least 125µm and more usually at least 200µm, and preferably at least 500µm, and often at least 700µm. Thus the aggregates can be made to a size such that they have optimum flow properties and substantially no dusting or other absorption problems.

The particles within each aggregate will always be much smaller than the aggregate size since generally each aggregate contains at least 5 or 10, usually at least 50 and often at least 100 of the particles. The particles can have whatever size is optimum for their eventual performance and so if their optimum size (from the point of view of absorption and performance) is, say, 250µm then the particles can have this size. Generally however the particles are of a size such that flow properties would be a problem (e.g., below 125 or 150µm if the particles are made by comminuting gel) and/or such that dusting or absorption properties would be a problem, e.g., below 50µm. The particles often have a size below 30µm and often below 20µm. They may be above 10µm but can be smaller, e.g., 5µm, 1µm or less.

The aggregates are made by bonding substantially dry polymer particles by wetting them with an aqueous liquid that serves as a bonding agent for the particles by rendering their surfaces sufficiently sticky to form a sticky mass and then aggregating the particles while they are sticky. Thus the particles can be aggregated by swelling with sufficient water to form a comminutable gel followed by comminution to a coarse size and drying, to provide internally bonded aggregates.

Preferably the aggregates have a porous texture and so should not be compressed significantly while sticky. Preferably no deliberate compression step is applied while they are sticky. For instance the particles may be wetted with the aqueous liquid while entrained in air or tumbled along a surface to form aggregates which are dried while entrained in air or while being tumbled and may, if necessary, be comminuted to aggregates of the desired size. Suitable apparatus of this type is a fluid bed blender and agglomerator.

In another method, the polymer particles are stirred with the aqueous liquid to form an adhesive mass and this is then comminuted, for instance by extrusion through a screen. The comminution steps can be conducted while the mix is moist but often it is best to dry the mass and then comminute any oversize pieces in the mass, e.g., by attrition or sieving.

The fact that the particles have been aggregated using water can be seen easily by microscopic examination. The use of the water causes adjacent particles to merge into each other and tends to remove the sharp contours that comminuted fines normally have.

The aqueous liquid can be any aqueous liquid that will promote bonding of the particles to form friable aggregates. If the particles become adhesive upon contact with water then it is sufficient for the aqueous liquid to be water without any additional bonding agent in it. Often the water is used by itself but it can be desirable for the liquid to be an emulsion of water in a water immiscible liquid, such as kerosene, or to be an aqueous solution in a polar solvent such as aqueous methanol, ethanol, isopropanol or acetone.

In some instances it is desirable to include an aggregate binder in the aqueous liquid so as to impart additional strength to the aggregates. The aggregate binder may be a substantially non-ionic polymer, for instance polyvinyl alcohol, or it may be an ionic polymer. If it is ionic, it is generally preferable for it to be co-ionic with any ionic charge in the polymer particles. For instance if the polymer particles are anionic then the aggregate binder is preferably also anionic (for instance sodium polyacrylate or other water soluble anionic polymer of low molecular weight, typically below 50,000 and often below 10,000) whilst if the polymer particles are cationic then the aggregate binder is preferably a water soluble cationic polymer such as a polyamine or other relatively low molecular weight cationic polymer such as a dimethylaminoethyl methacrylate quaternary salt. In general, anionic and cationic aggregate binders can be formed from the same monomers as are discussed below for anionic or cationic polymer particles. Naturally occurring polymers, such as starches or cellulosic polymers, may be used as part or all of the aggregate binder.

The degree of bonding of the particles within the aggregate must be selected such that the aggregates have the desired degree of friability. If the degree of bonding is too high then the aggregates will withstand rough handling but may not break down upon mixing with the eventual aqueous medium. For instance if too much aggregate binder is added, or if water is being used and too much water is applied, the aggregates may become too firmly bonded and hard. If too little is used, the aggregates may break down too easily. Generally the amount of water is at least 10%, usually at least 30% on dry weight of polymer, but is generally below 120% and often below 80%. If a polymeric aggregate binder is included in the aqueous liquid then the amount is generally below 10% and often below 1% on the dry weight of polymer.

The particulate polymer that is in the form of aggregates can be a natural or modified natural polymer such as a starch or cellulose, for instance carboxy methyl cellulose polymer, but is preferably a synthetic polymer, preferably formed from a water soluble ethylenically unsaturated monomer or monomer blend. Generally it is an ionic synthetic polymer formed from anionic or cationic monomer, optionally with a non-ionic monomer. It may be amphoteric, being formed from a mixture of cationic and anionic monomers, optionally with non-ionic monomer.

Suitable anionic monomers are ethylenically unsaturated carboxylic acids or sulphonic acids, often in the form of a water soluble ammonium or, preferably, alkali metal salt. Suitable carboxylic acids are methacrylic, itaconic, maleic or, preferably, acrylic acid. Suitable sulphonic acids include allyl, methallyl, vinyl and 2-acrylamido-2-methyl propane sulphonic acids, often as ammonium, or more usually, alkali metal salt.

Suitable cationic monomers include dialkylaminoalkyl (meth) -acrylamides and -acrylates, usually as acid addition or quaternary ammonium salts, and monomers such as diallyl dimethyl ammonium chloride.

Suitable non-ionic monomers include (meth) acrylic esters, methacrylamide and, preferably, acrylamide.

The polymer in the polymeric product is normally unreactive but can include groups that will cause cross linking or the polymer can be reacted during or after the formation of the aggregates, for instance by reaction of acrylamide groups with glyoxal or formaldehyde.

It is particularly preferred to provide the aggregates or the particles within them with a surface layer that is more highly cross linked than the remainder of the particles in order to promote the rate of hydration of the individual particles and/or the rate of disruption of the aggregates. Ways of providing surface cross linking on soluble or swellable polymer particles are well known and comprise exposing the pre-formed particles to a suitable cross linking agent. For instance the aggregates may be exposed to a suitable cross linking agent after their formation or, preferably, the cross linking agent is included in the aqueous medium used for forming the aggregates. When the polymer is anionic a suitable cross linking agent is a polyvalent metal compound, for instance an aluminium compound. Other cross linking agents include epoxy compounds and counter-ionic polymers, generally having a low (e.g., below 100,000) molecular weight.

The polymer can include a mixture of water soluble cationic and water soluble anionic polymers in dry form since the mixture will be stable when dry but will react to insolubilise the polymer when wet. Thus aggregates of anionic polymer may be mixed dry with aggregates of cationic polymer.

The polymer is preferably formed from water soluble ethylenically unsaturated monomer or monomer blend of which at least 5% is ionic, and often at least 10% up to 100% by weight is anionic or cationic and 0 to 90% is nonionic.

The molecular weight of the soluble polymer will normally be selected so that the polymer has the desired performance properties, and conveniently so that it also serves as an aggregate binder. Normally the molecular weight is above 1 million. The intrinsic viscosity is generally above 4dl/g. When the polymer is cationic, values of up to 12 or 15dl/g are usually adequate but when the polymer is anionic or non-ionic values of up to 25 or 30 or higher may be used.

The aggregates can be formed solely from the polymer particles and binder but it is frequently desirable to include a secondary particulate material in the mix that is to be agglomerated. This material can modify the performance of the aggregates and can facilitate the production of aggregates of any desired size by facilitating the comminution of the aggregates to the desired particle size, either while they are sticky or, preferably, after drying.

Preferably the aggregates include a secondary material that is generally particulate (often below 200µm or 150µm in size) and that is a disintegrating aid for promoting disintegration of the aggregates. This disintegrating aid can be a water insoluble particulate material that will prevent the polymer particles bonding too strongly to each other and so will promote disintegration. Examples include coal, coke, fine metals, limestone, dolomite and clays, provided that the clay does not have a structure such that the polymer penetrates firmly into the clay. A particularly preferred insoluble disintegrating aid is very small particle size (e.g., below 10µm and usually below 1µm) material such as fumed silica, that is coated on to the polymer particles. This may be included in the aqueous liquid to provide a coating on the polymer particles. This coating prevents or reduces gel blocking and so promotes disintegration.

Generally however the disintegrating aid is a material that is generally monomeric and that is generally highly water soluble in the sense that, when the aggregate is contacted with water, the disintegrating aid will dissolve faster than the polymer particles and will tend to promote disintegration of the aggregates. Particulate secondary material may have a size similar to the polymer particles or may be smaller or larger than the particles.

The combination of the polymer, the disintegrating aid or other second material, and the aggregate binder (if present) will be chosen such that the aggregates have disintegration properties that are suitable for their intended use. For example, if the disintegration is intended to occur as a result of mixing the aggregates with water insoluble particulate material in the presence of a relatively low amount of water, disintegration may be due primarily to physical abrasion. However when the water-containing medium is bulk water, the combination of disintegrating aid and binder, if present, should be such that the aggregates will disintegrate spontaneously upon contact with water, optionally accompanied by stirring.

The secondary material that is to serve as a disintegrating aid may be merely an inert material that is to promote disintegration or it may be a material that is to serve a useful purpose with the polymer fines.

A product according to the invention is for the formation of an aqueous solution containing inorganic coagulant and a water soluble polymeric flocculant by dissolving a single powder product into the water. For this purpose the disintegrating aid should be the inorganic coagulant, typically a polyvalent metal salt such as aluminium sulphate. Normally this is present in a large excess relative to the flocculant and so a suitable product is formed from 5 to 30% water soluble polymeric flocculant fines and 95 to 70% by weight inorganic polyvalent metal salt coagulant. The polymeric flocculant is a high molecular weight (e.g., IV above 4dl/g) ionic polymer. It may be anionic but is often cationic, for instance a polymer of dialkylaminoalkyl (meth) -acrylate or -acrylamide (as acid addition or quaternary salt) with, optionally, acrylamide. There may be 0 to 10% polymeric aggregate binder.

Another product according to the invention is formed of 50 to 90% water soluble polymeric flocculant or viscosifier with 50 to 10% of a more soluble compound that may be organic or inorganic and which serves primarily as a diluent that facilitates disintegration of the agglomerates upon addition to water. Typical materials are ammonium sulphate and sucrose. The viscosifier can be non-ionic or ionic of molecular weight above 100,000, and often IV above ldl/g and generally above 4dl/g. The flocculant can be anionic or cationic and can be any suitable flocculant, for instance as described above.

In EP-A-202780 we describe flocculation processes using polymeric flocculant that at the time of addition to the suspension to be flocculated is in the form of particles below 10µm, and in which the polymer is added in a floc stabilising amount and the flocculated solids are subjected to shear in the presence of the aqueous medium substantially without increasing the amount of suspended solids in the aqueous medium. The methods that are preferred in EP-A-202780 for providing the particles are emulsion or reverse phase polymerisation but now we can use agglomerates above 10µm in size of polymer fines of below 10µm, the polymers typically being the same as in EP-A-202780. Preferably the polymers are cationic and have an ionic regain (as explained in EP-A-202780) of at least 15% and up to 70%, although they can be anionic. Preferably they are slightly cross linked, as described in EP-A-202780. However they can be wholly soluble and of low ionic regain. Secondary material included in aggregates for this purpose can be a coagulant but is generally a water soluble diluent typically in an amount of 10 to 50% by weight, as described above (e.g., ammonium sulphate or sucrose).

When the disintegration aid is a coating of very fine particulate material such as fumed silica, the amount of disintegration aid may be lower than the preferred 10% minimum, for instance it may be down to about 2% (so that there can be up to 98% polymer) or less, e.g., 0.5%. Such coatings, and/or surface cross linking, are particularly useful when the polymer cross viscosifier or flocculant. There may be 0-10% polymeric aggregate binder.

Specific embodiments of the invention are disclosed in the dependent claims.

The following is an example of the invention.

A copolymer of acrylamide and dimethylaminoethyl acrylate quaternary salt having intrinsic viscosity above 6dl/g and having a moderate ionic regain is made broadly as in Example 1 of EP-A-202780. The dispersion is dried by azeotroping to give a particle size 90% by weight below 3µm. The particles are precipitated from the dispersion by adding acetone and are then further dried to remove the acetone. While entrained in air, they are sprayed with water containing fumed silica. This has an extremely small particle size and so forms a coating around the polymer particles. The particles become aggregated, and then partly dried, while entrained in the air and are collected and further dried in a fluidised bed. The resultant aggregates have a size above 150µm but disintegrate rapidly into the individual particles, and dissolve, upon addition to water.

The resultant solution has flocculation performance properties similar to those of the starting polymer, as explained in EP-A-202780.

If the powder is added to water, without being aggregated, serious gel blocking occurs and it is inpracticable to obtain a flocculant solution by this technique.

## Claims

1. A particulate polymeric product for use as a viscosifier or flocculant comprising particles of a substantially water soluble polymeric viscosifier or flocculant wherein the particles have a size of below 10µm and are present in the form of friable aggregates of which at least 90% have a size above 50µm and wherein the aggregates have been made by bonding substantially dry polymer particles with an aqueous liquid and drying the aggregates and the aggregates are friable in that they can be broken down to the individual polymer particles by mixing with an aqueous medium that is to be thickened or flocculated.

2. A product according to claim 1 in which the substantially water soluble cationic polymer particles are cross linked and have ionic regain of 15 to 70%.

3. A product according to claim 1 or claim 2 in which the aggregates also comprise particles of a disintegrating aid for promoting disintegration of the aggregates upon mixing with the aqueous medium and/or the particles have surface cross linking.

4. A product according to any preceding claim in which the aggregates are formed of about 50 to 98% by weight water soluble polymer particles, about 2 to 50% by weight disintegration aid and 0 to 10% by weight polymeric aggregate binder.

5. A product according to any preceding claim in which the water soluble polymer particles are a cationic polymer having IV above 4dl/g.

6. A product according to any one of claims 1 to 3 in which the water soluble polymer particles are an ionic polymer having IV at least 4dl/g and the aggregates are formed of 5 to 30% by weight of the polymer, 95 to 70% by weight of water soluble, particulate inorganic coagulant and 0 to 10% by weight of polymeric aggregate binder.

7. A product according to claim 1 or claim 2 in which the polymer particles are formed from 0 to 90% by weight acrylamide and 10 to 100% by weight anionic or cationic monomer.

8. A product according to any one of claims 1 to 3 in which the polymer particles were formed from a monomer or monomer blend comprising ethylenically unsaturated carboxylic or sulphonic monomer as free acid or water soluble salt.

9. A product according to claim 8 in which the acid is selected from acrylic acid, 2-acrylamido methyl propane sulphonic acid and allyl sulphonic acid.

10. A product according to any one of claims 1 to 3 in which the polymer particles were formed from a monomer or monomer blend comprising dialkylaminoalkyl (meth) -acrylate or -acrylamide as addition or quaternary ammonium salt.

11. A flocculation process comprising adding a product according to any one of claims 1 to 10 to a suspension that is to be flocculated.

## Patentansprüche

1. Teilchenförmiges polymeres Produkt zur Verwendung als Viskosmacher oder Flockungsmittel, das Teilchen eines im wesentlichen wasserlöslichen polymeren Viskosmachers oder Flockungsmittels umfaßt, worin die Teilchen eine Größe unter 10 µm aufweisen und in Form von bröckeligen Aggregaten vorliegen, von denen mindestens 90% eine Größe über 50 µm aufweisen und worin die Aggregate durch Binden von im wesentlichen trockenen Polymerteilchen mit einer wäßrigen Flüssigkeit und Trocknen der Aggregate hergestellt wurden und die Aggregate insofern bröckelig sind, als sie durch Mischen mit einem wäßrigen Medium, das eingedickt oder geflockt werden soll, in die einzelnen Polymerteilchen aufgespalten werden können.

2. Produkt nach Anspruch 1, in welchem die im wesentlichen wasserlöslichen kationischen Polymerteilchen vernetzt sind und eine Ionen-Wiedergewinnung von 15 bis 70% aufweisen.

3. Produkt nach Anspruch 1 oder Anspruch 2, in welchem die Aggregate auch Teilchen eines Zerfalls-Hilfsmittels zur Förderung des Zerfalls der Aggregate beim Mischen mit dem wäßrigen Medium umfassen und/oder die Teilchen Oberflächenvernetzung aufweisen.

4. Produkt nach irgendeinem vorhergehenden Anspruch, in welchem die Aggregate aus etwa 50 bis 98 Gew.-% wasserlöslichen Polymerteilchen, etwa 2 bis 50 Gew.-% Zerfalls-Hilfsmittel und 0 bis 10 Gew.-% polymerem Aggregat-Bindemittel gebildet sind.

5. Produkt nach irgendeinem vorhergehenden Anspruch, in welchem es sich bei den wasserlöslichen Polymerteilchen um ein kationisches Polymer mit einer GV über 4 dl/g handelt.

6. Produkt nach irgendeinem der Ansprüche 1 bis 3, in welchem es sich bei den wasserlöslichen Polymerteilchen um ein ionisches Polymer mit einer GV von mindestens 4 dl/g handelt und die Aggregate aus 5 bis 30 Gew.-% Polymer, 95 bis 70 Gew.-% wasserlöslichem, teilchenförmigem anorganischem Koagulierungsmittel und 0 bis 10 Gew.-% polymerem Aggregat-Bindemittel gebildet sind.

7. Produkt nach Anspruch 1 oder Anspruch 2, in welchem die Polymerteilchen aus 0 bis 90 Gew.-% Acrylamid und 10 bis 100 Gew.-% anionischem oder kationischem Monomer gebildet sind.

8. Produkt nach irgendeinem der Ansprüche 1 bis 3, in welchem die Polymerteilchen aus einem Monomer oder einer Monomermischung umfassend ethylenisch ungesättigtes Carbonsäure- oder Sulfonsäure-Monomer als freie Säure oder wasserlösliches Salz gebildet wurden.

9. Produkt nach Anspruch 8, in welchem die Säure aus Acrylsäure, 2-Acrylamidomethylpropansulfonsäure und Allylsulfonsäure ausgewählt ist.

10. Produkt nach irgendeinem der Ansprüche 1 bis 3, in welchem die Polymerteilchen aus einem Monomer oder einer Monomermischung umfassend Dialkylaminoalkyl(meth)acrylat oder -acrylamid als Additions- oder quartäres Ammoniumsalz gebildet wurden.

11. Flockungsverfahren, umfassend die Zugabe eines Produkts nach irgendeinem der Ansprüche 1 bis 10 zu einer Suspension, die geflockt werden soll.

## Revendications

1. Produit polymère particulaire destiné à servir d'agent conférant de la viscosité ou de floculant, ce produit comprenant des particules d'un agent conférant de la viscosité ou d'un floculant polymère essentiellement hydrosoluble, produit dans lequel les particules ont une taille inférieure à 10 µm et sont présentes sous forme d'agrégats friables dont au moins 90% ont une taille supérieure à 50 µm, et dans lequel les agrégats ont été obtenus par liaison de particules polymères essentiellement sèches, liaison obtenue à l'aide d'un liquide aqueux, et séchage des agrégats, et les agrégats sont friables du fait qu'ils peuvent être brisés en donnant les particules polymères individuelles, par mélangeage avec un milieu aqueux qui doit être épaissi ou floculé.

2. Produit selon la revendication 1, dans lequel les particules polymères cationiques essentiellement hydrosolubles sont réticulées et ont un regain ionique de 15 à 70%.

3. Produit selon la revendication 1 ou selon la revendication 2, dans lequel les agrégats comprennent également des particules d'un adjuvant de désagrégation pour amplifier ou favoriser une désagrégation des agrégats lors de leur mélangeage avec le milieu aqueux et/ou les particules présentent de la réticulation en surface.

4. Produit selon l'une quelconque des revendications précédentes, dans lequel les agrégats sont formés d'environ 50 à 98% en poids de particules polymères hydrosolubles, environ 2 à 50% en poids d'un adjuvant de désagrégation et 0 à 10% en poids d'un liant polymère pour formation d'agrégats.

5. Produit selon l'une quelconque des revendications précédentes, dans lequel les particules polymères hydrosolubles sont formées d'un polymère cationique dont la viscosité intrinsèque est supérieure à 4 dl/g.

6. Produit selon l'une quelconque des revendications 1 à 3, dans lequel les particules polymères hydrosolubles sont constituées par un polymère ionique dont la viscosité intrinsèque vaut au moins 4 dl/g, et les agrégats sont formés de 5 à 30% en poids du polymère, 95 à 70% en poids d'un agent coagulant minéral particulaire hydrosoluble et 0 à 10% en poids d'un liant polymère pour formation d'agrégats.

7. Produit selon la revendication 1 ou la revendication 2, dans lequel les particules polymères sont formées de 0 à 90% en poids d'acrylamide et de 10 à 100% en poids d'un monomère anionique ou cationique.

8. Produit selon l'une quelconque des revendications 1 à 3, dans lequel les particules polymères sont formées à partir d'un monomère ou d'un mélange de monomères comprenant du monomère carboxylique ou sulfonique, à insaturation éthylénique, sous forme d'acide libre ou sous forme de sel hydrosoluble.

9. Produit selon la revendication 8, dans lequel l'acide est choisi parmi l'acide acrylique, l'acide 2-acrylamidométhylpropanesulfonique et l'acide allylsulfonique.

10. Produit selon l'une quelconque des revendications 1 à 3, dans lequel les particules polymères ont été formées à partir d'un monomère ou d'un mélange de monomères comprenant du (méth)acrylate de dialkylaminoalkyle ou du dialkylaminoalkyl (méth)acrylamide sous forme de sel d'addition ou de sel d'ammonium quaternaire.

11. Procédé de floculation comprenant l'addition d'un produit, selon l'une quelconque des revendications 1 à 10, à une suspension qu'il s'agit de soumettre à floculation
